# EUROPEAN PATENT APPLICATION

(11) **EP 0 736 996 A2**
(43) Date of publication of application: **09.10.1996**
(21) Application number: 96302079.7
(22) Date of filing: 26.03.1996
(51) Int. Cl.: H04M 11/00, H04L 29/00

(54) **Method of and apparatus for transmitting voice messages in a multiuser interactive virtual environment**

(30) Priority: 07.04.1995 US 418329
(71) Applicant: AT&T IPM Corp., Coral Gables, Florida 33134 (US)
(72) Inventor: Funkhouser, Thomas A., Berkeley Heights, New Jersey 07922 (US)
(74) Representative: Watts, Christopher Malcolm Kelway, Dr.

(57) **Abstract**

The invention relates to a set of at least one server that receives an input audio signal representative of a sound generated at a first locale associated with a first user device and transmits an output audio signal to a second user device wherein the output audio signal is related to both the input audio signal and the MIVE. More specifically, after receiving the input audio signal is associated with a first entity inhabiting a first location within the MIVE, the server identifies a set of at least one audio mapping. The set of at least one audio mapping comprises an audio mapping that relates a second entity inhabiting a second location within the MIVE to the first entity. The audio mapping is based upon a set of characteristics of the MIVE. Based upon the audio mapping, the set of at least one server modifies the input audio signal to form an output audio signal. Finally, the set of at least one server transmits the output audio signal to a user device associated with the second entity.

## Description

### Field Of The Invention:

The present invention relates to communication servers. More specifically, the present invention relates to a server for multiuser interactive games (MIGs") operating in a multiuser interactive virtual environment ("MIVE").

### Background Of The Invention:

A MIG may be played by a set of players associated with a set of user devices. The set of user devices communicates with a server. The set of user devices is also associated with a set of entities that inhabit locations within the MIVE. The set of entities may be thought of as a set of gamepieces of the MIG similar in nature to gamepieces such as "the dog" and "the shoe" in the well known Monopoly® brand board game. Although it is known to provide a server that allows the set of players to play the MIG from a visual perspective, the server does not receive voice signals representative of voice signals originating from any of the players in the set of players. Consequently, none of the players receive voice signals from the server.

There is a technique for providing voice signals to players playing a MIG. For example, it is known to provide each of two players with a simultaneous voice and data modem ("SVD modem") to allow the two players to play a MIG. In this instance, each of the two players receives voice signals from the other player. However, MIGs in which two players each use an SVD modem are only played on a point-to-point basis (i.e., the MIGs are limited to two players).

### Summary Of The Invention:

The invention relates to a set of at least one server that receives an input audio signal representative of a sound generated at a first locale associated with a first user device and transmits an output audio signal to a second user device wherein the output audio signal is related to both the input audio signal and the MIVE. More specifically, after receiving the input audio signal which is associated with a first entity inhabiting a first location within the MIVE, the server identifies an audio mapping. The audio mapping relates a second entity inhabiting a second location within the MIVE to the first entity. The audio mapping is based upon a set of characteristics of the MIVE. Based upon a set of at least one audio mapping comprising the audio mapping, the set of at least one server modifies the input audio signal to form an output audio signal. Finally, the set of at least one server transmits the output audio signal to a user device associated with the second entity.

Advantageously, the user device associated with the second entity is capable of outputting a signal representative of the input audio signal and the multiuser interactive virtual environment resulting in a more realistic auditory experience for a player at the locale of the user device associated with the second entity.

Also advantageously, the user device associated with the second entity is capable of outputting a weighted signal representative of the input audio signal, a set of additional input audio signals representative of a set of additional sounds occurring at a set of additional locales associated with a set of additional user devices, and the multiuser interactive virtual environment.

Other objects and advantages of the present invention will become apparent to those skilled in the art from the remainder of the specification.

### Brief Description Of The Drawings:

Figure 1 is a diagram of a system in which a server in accordance with the present invention may be operated;
Figure 2 is an illustration of a multiuser interactive virtual environment that may be associated with the present invention;
Figure 3 is a more detailed diagram of the server of Figure 1;
Figure 4 is a flowchart describing the operation of the server of Figure 1; and
Figure 5 shows a voice bridge matrix that may be used in the server of Figure 1.

### Detailed Description:

### Introduction:

MIG systems have a set of at least one server (hereinafter referred to collectively as "the server"). The server is adapted to communicate with a set of user devices. Each active player of the MIG operates a corresponding user device in the set of user devices in order to communicate with the server and other players. Each user device being operated by an active player has a corresponding entity which inhabits a location within the MIVE. As used herein, MIVE shall mean an environment that permits a set of players, via a set of user devices and a server, to be given an experience of being associated with a set of entities which simultaneously inhabit a shared environment wherein at least a portion of the shared environment is displayed on a display device of each player in the set of players. As used herein, "audio" comprises "voice" in addition to other sounds.

The server needs to communicate with each user device by receiving input messages therefrom and transmitting output messages thereto while a MIG is being played. The input messages comprise input audio signals and the output messages comprise output audio signals.

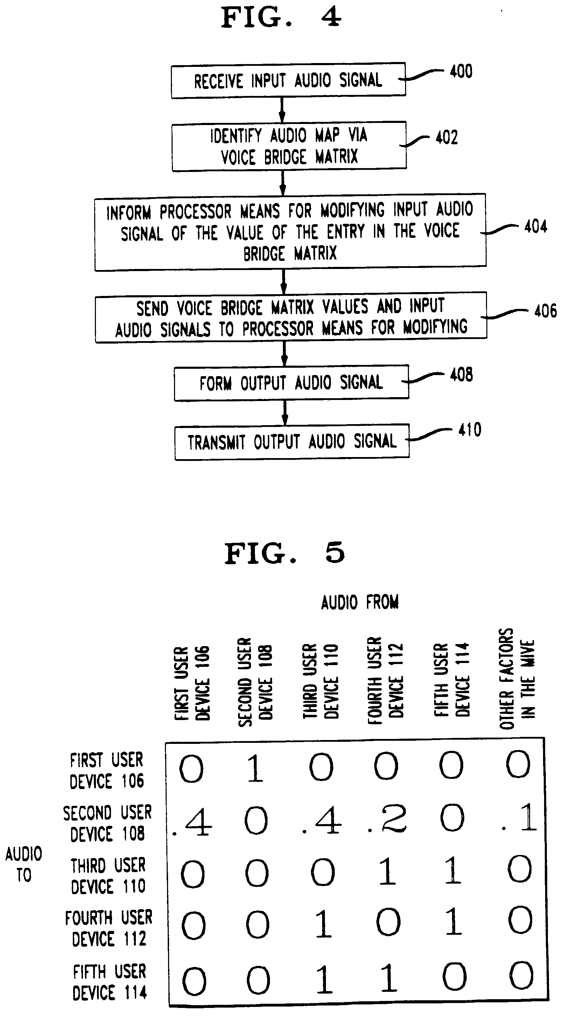

For clarity of explanation, the methods described with respect to Figure 4 make use of functional boxes denoted by reference numerals. The functions executed in these boxes may be provided through the use of either shared or dedicated hardware, including, but not limited to, hardware capable of executing software. These functions may be implemented by a "processor" or multiple "processors." Thus, use of the term "processor", "processor means", and forms thereof should not be construed to refer exclusively to hardware capable of executing software.

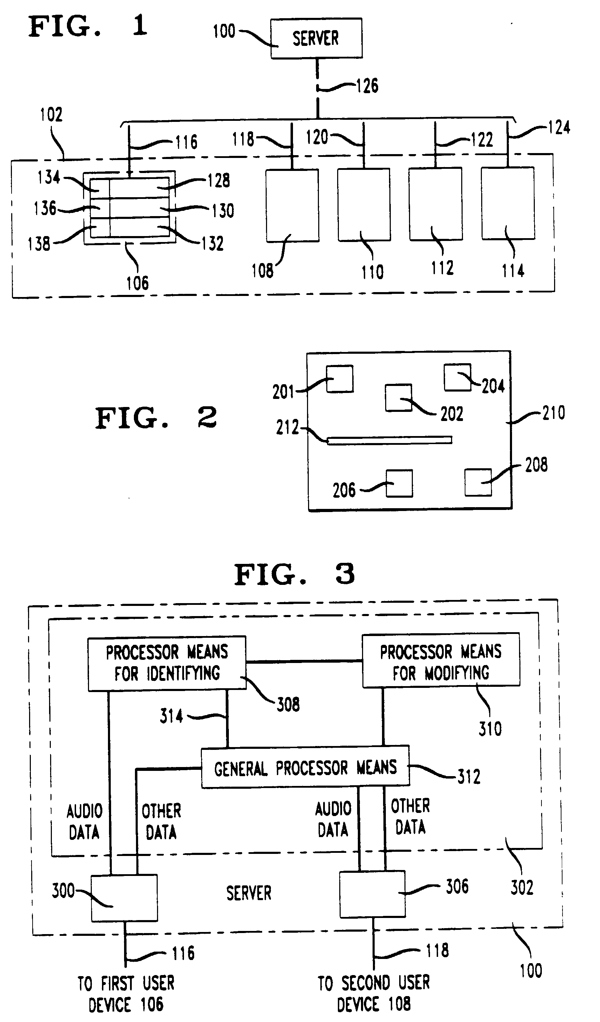

The manner in which the server receives input audio signals, processes the input audio signals to form output audio signals, and transmits the output audio signals will now be described with reference to Figures 1 through 5.

### Illustrative Embodiment:

Referring to Figure 1, a server 100 is shown connected to a set of user devices 102. More specifically, the set of user devices 102 comprises a first user device 106, a second user device 108, a third user device 110, a fourth user device 112, and a fifth user device 114. The first user device 106, the second user device 108, the third user device 110, the fourth user device 112, and the fifth user device 114 communicate with the server 100 over a first communications channel 116, a second communications channel 118, a third communications channel 120, a fourth communications channel 122, and a fifth communications channel 124, respectively (collectively referred to as a set of communication channels 126). Illustratively, the set of communication channels 126 is a set of telephone lines. The first user device 106 comprises an input/output ("I/O") device 128, a processor 130, a display device 132, a microphone 134, a set of at least one speaker 136, and an input device 138. Preferably, the I/O device 128 is an SVD modem. The input device 138 may be a keyboard, a mouse device, and/or other input devices known to those skilled in the art. It should be understood that every other user device in the set of user devices 102 (i.e., the second user device 108, the third user device 110, the fourth user device 112, and the fifth user device 114) comprises an I/O device, a processor, a display device, a microphone, a set of at least one speaker, and an input device. However, the components are not shown individually in the interest of brevity.

Referring to Figure 2, a first entity 201, a second entity 202, a third entity 204, a fourth entity 206, and a fifth entity 208 all inhabit the MIVE 210. Thus, the MIVE 210 is said to comprise a set of entities 211 (not shown). Additionally, the MIVE comprises a wall 212. The first entity 201, the second entity 202, the third entity 204, the fourth entity 206, and the fifth entity 208 are associated with the first user device 106, the second user device 108, the third user device 110, the fourth user device 112, and the fifth user device 114, respectively. Additionally, the first user device 106, the second user device 108, the third user device 110, the fourth user device 112, and the fifth user device 114 are associated with and co-located with a first player 214, a second player 216, a third player 218, a fourth player 220, and a fifth player 224, respectively (none of which are shown), which comprise a set of players 224.

Again referring to Figure 2, the first entity 201 is associated with both the first user device 106 and the first player 214 in numerous manners as will be appreciated by those skilled in the art. Typically, the first player 214 will manipulate the input device 138 of the first user device 106. Additionally, the first player 214 may speak into the microphone 134 to, e.g., attempt to alter a result of the MIG, heckle another player, etc.... In this typical scenario, a first signal emanates from the input device 138 and a second signal emanates from the microphone. A combination of the processor 130 and the I/O device 128 (of the first user device 106) accept the first signal and the second signal and generate a third signal that will be sent to the server via the first communications channel 116. With respect to the server 100, the third signal comprises an input audio signal (in addition to other data signals). The manner in which the server 100 receives the input audio signal, processes it to form an output audio signal, and transmits the output audio signal to the second user device 108 will now be described in more detail with reference to Figures 3, 4 and 5.

Referring to Figure 3, the server 100 comprises a first I/O device 300, a processor 302, and a second I/O device 306 all connected as shown. Preferably, the first I/O device 300 and the second I/O device are SVD modems. The processor 302 comprises processor means for identifying an audio mapping 308, processor means for modifying the input audio signal 310, and general processor means 312 all connected as shown. Preferably, the processor means for modifying the input audio signal 310 comprises a voice bridge. Note that the first I/O device 300 and the second I/O device each have two separate lines coupling them to the processor 302. These lines are labelled "audio data" and "other data." The "other data" comprises data related to the first signal (as used in the above paragraph) whereas the "audio data" comprises data related to the second signal (also as used in the above paragraph). The processor 302 also comprises a control line 314 connecting the general processor means 312 to the processor means for identifying an audio mapping 308. The function of the control line will be explained later.

Referring to Figure 4, a flowchart describing the operation of the server 100, and more specifically the processor 302, will now be described with reference to the first user device 106 and the second user device 108 being used by the first player 214 and the second player 216, respectively, to play an already initialized MIG. The separation of audio data from other data as performed by SVD modems is well known. Although the focus will be on the processing of audio data, it should be noted that the other data is processed by the general processor means 312. The other data may comprise data relating to a location, size, shape, and/or color of the first entity 201 within the MIVE, a score or ranking of the first player 214, data relating to a team affiliation of the first entity (for team MIGs), and/or other traits as are well known to those skilled in the art.

Referring to Figures 4 and 5, the processor 302 receives the input audio signal (in the form of "audio data") as shown in box 400. Next, as shown in box 402, the processor means for identifying an audio mapping 308 looks up (from the voice bridge matrix) a multiplier value representing a value by which to multiply a feature (e.g., a volume) of the input audio signal. The voice bridge may be implemented with a digital signal processing integrated circuit. Further, an example of voice bridge matrix is shown in Figure 5. In the present example, the input audio signal is coming from the first user device 106 and the output audio signal is going to the second user device 108. Thus, the audio mapping for the example would have a value equal to 0.4. This is the value in the first column, second row of the voice bridge matrix. Other values also appear in the second row. For example, the value 0.1 is present in the sixth column of the second row. The sixth column is labelled "other factors in the MIVE." These other factors may relate to the noise from a jet airplane flying in the MIVE directly overhead the first entity 201. In this situation, to generate a more realistic audio experience for the second player 216, the "0.1" entry from column six might slightly muffle the "0.4" entry from column one (and other entries in the second row). In essence, the second row, first column of the voice bridge matrix informs the processors means for modifying the input audio signal 310 to multiply the input audio signal by 0.4. As shown in Figure 5, there may be numerous values by which to multiply a given input audio signal from a given user device or other item in the MIVE. For example, an input audio signal from the third user device 110 will be multiplied by 0.4 and an input audio signal from the fourth user device 112 will be multiplied by 0.2. All of the values by which to multiply the input audio signals are sent to the processor means for modifying 310 as shown in box 406. Next, as shown in box 408, the processor means for modifying 310 modifies all of the input audio signals based upon their respective audio mappings (e.g., values in the voice bridge matrix) to form the output audio signal. Finally, the output audio signal is transmitted via the general processor means 312 to the second I/O device and eventually to the second user device 108. As a result, the second player 216 at the second user device 108 receives a more realistic auditory experience while playing the MIG.

Those skilled in the art will appreciate that a multitude of variations are possible based upon the above configuration of the processor 302 and the voice bridge matrix. A description of some nonexhaustive variations are discussed in the following three paragraphs.

Referring to Figures 3 and 5, as a first example, control line 314 enables the general processor means 312 to dynamically modify values in the voice bridge matrix. This may desirable if, for example, the second user device 108 desires to receive the output audio signal based upon a distance the second entity 202 is located from the first entity 201. In other words, suppose the general processor means 312 processes the other data from the first user device 106 (related to the first entity) and determines that the first entity 201 is moving away from the second entity 202. The general processor means 312 could calculate a new value (e.g., a lower value) for an audio mapping from the first user device 106 to the second user device 108. The new value would be sent, via the control line 314, to the processor means for identifying an audio mapping 308. The new value would then replace the value in the first column, second row of the voice bridge matrix.

As a second example, if a team of players was formed comprising, e.g., the third entity 204, the fourth entity 208, and the fifth entity, the team may want to be in constant communication with each other regardless of distances from each other. The portion of the voice bride matrix allowing for such communications is shown in rows three through five of Figure 5. It should be noted that in the second example, there is no need to dynamically update values associated with audio mappings unless a particular player, e.g., leaves the team, is added to the team, and/or emerges as a "leader" of the team whose voice must be heard above all other team members.

As a third example, the first player may wish to hear only one other player (e.g., the second player) whose entity (e.g., the second entity 202) in the MIVE is the closest to the first entity 201. *See, e.g.,* Figure 2. Such a set of audio mappings is shown in the first row of Figure 5. In the third example, there may be a need to dynamically update the set of at least one audio mapping as described above with respect to the first example.

Although the invention has been described with respect to a particular illustrative embodiment and a particular environment, many variations will be apparent to those skilled in the art. First, the invention could be implemented in environments such as interactive television environments. Second, the invention could be used in applications other than MIGs such as home shopping, collaborative design, network social groups, education, and training and simulation. Third, the SVD modems may either be built into the server or may be separate. Further, the SVD modems may transmit either analog or digital voice. Thus, those skilled in the art appreciate that the processor 302 may receive the input audio signal or the SVD modems may receive the input audio signal. Fourth, once the input audio signal enters the processor 302, is need not pass through the processor means for identifying 308 prior to going to the processor means for modifying 310. Instead, for example, the audio data line (shown in Figure 3 as connecting the first I/O device 300 to the processor means for identifying 308) could be split into two separate branches, with one branch going to the processor means for identifying 308 and the other branch going to the processor means for modifying 310. Fifth, numerous speakers and/or numerous microphones may be used to enhance, e.g., the second player's 216 auditory experience even further into a multichannel auditory experience. Sixth, the processor means for modifying may also be able to transform a player's voice via a voice transform to, e.g., make the voice scary based upon the player's role (e.g., a "bad guy") in the MIG. Seventh, the server 100 can have only one I/O device that communicates with each user device in the set of user devices 102. Eighth, the server 100 may not comprise any SVD modems but instead, may have I/O devices, such as I/O ports in the processor 302, that perform I/O functions. Thus, the server 100 should not be thought of as requiring SVD modems. Eighth, the server may comprise a set of servers. Ninth, an element in the MIVE 210 (e.g., the wall 212) may be used to preclude an entity (e.g., the second entity 202) from receiving any audio signal based upon actions of another entity (e.g., the fourth entity 206). Thus, the invention is defined in the appended claims.

## Claims

1. A method comprising:
(a) receiving in a set of at least one server an input audio signal associated with a first entity inhabiting a first location within a multiuser interactive virtual environment;
(b) identifying an audio mapping relating a second entity inhabiting a second location within said multiuser interactive virtual environment to said first entity based upon a set of characteristics of said multiuser interactive virtual environment;
(c) based upon a set of at least one audio mapping comprising said audio mapping, modifying said input audio signal to form an output audio signal; and
(d) transmitting said output audio signal to a user device associated with the second entity.

2. The method of claim 1 further comprising:
(a) receiving in said set of at least one server a set of other data, said set of other data and said input audio signal comprising a set of input data;
(b) based upon said set of input data, modifying said audio mapping.

3. The method of claim 1 or claim 2 wherein the step of modifying said audio mapping occurs prior to the step of modifying said input audio signal.

4. The method of claim 1 or claim 2 wherein the step of modifying said audio mapping occurs after the step of modifying said input audio signal.

5. The method of any of the preceding claims further comprising:
(a) receiving in said set of at least one server a set of additional input audio signals associated with a set of additional entities inhabiting a set of additional locations within said multiuser interactive virtual environment; and
(b) identifying a set of additional audio mappings relating said second entity to said set of additional entities;
wherein said set of at least one audio mapping comprises said set of additional audio mappings.

6. The method of any of the preceding claims further comprising modifying a voice transform relating said first entity and said second entity based upon said audio mapping.

7. The method of any of the preceding claims wherein the set of characteristics includes a distance from the first entity to the second entity.

8. The method of any of the preceding claims wherein the set of characteristics includes an orientation of the second entity with respect to the first entity.

9. The method of any of the preceding claims wherein the set of characteristics includes a simulation of the propagation of sound within said multiuser interactive virtual environment.

10. The method of claim 9 wherein said simulation results in a voice associated with said first entity being imperceivable to said second entity owing to a geometry of said multiuser interactive virtual environment.

11. The method of any of the preceding claims wherein the step of modifying said input audio signal comprises multiplying a volume associated with the audio signal by a value.

12. A set of at least one server comprising:
(a) means for receiving an input audio signal associated with a first entity inhabiting a first location within a multiuser interactive virtual environment;
(b) means for identifying an audio mapping relating a second entity inhabiting a second location within said multiuser interactive virtual environment to said first entity based upon a set of characteristics of said multiuser interactive virtual environment;
(c) means for modifying said input audio signal to form an output audio signal, said means for modifying being responsive to a set of at least one audio mapping comprising said audio mapping; and
(d) means for transmitting said output audio signal to a user device associated with the second entity.

13. The set of at least one server of claim 12 comprising:
(a) means for receiving in said set of at least one server a set of other data, said set of other data and said input audio signal comprising a set of input data;
(b) means for modifying said audio mapping based upon said set of input data.

14. The set of at least one server of claim 12 or claim 13 further comprising:
(a) means for receiving in said set of at least one server a set of additional input audio signals associated with a set of additional entities inhabiting a set of additional locations within said multiuser interactive virtual environment; and
(b) means for identifying a set of additional audio mappings relating said second entity to said set of additional entities;
wherein said set of at least one audio mapping comprises said set of additional audio mappings.

15. The set of at least one server of any of claims 12 to 14 further comprising means for modifying a voice transform relating said first entity and said second entity based upon said audio mapping.

16. The set of at least one server of any of claims 12 to 15 wherein the set of characteristics includes a distance from the first entity to the second entity.

17. The set of at least one server of any of claims 12 to 16 wherein the set of characteristics includes an orientation of the second entity with respect to the first entity.

18. The set of at least one server of any of claims 12 to 17 wherein the means for modifying said input audio signal comprises means for multiplying a volume associated with the audio signal by a value.
